# EUROPEAN PATENT APPLICATION

(11) **EP 4 667 069 A1**
(43) Date of publication of application: **24.12.2025**
(21) Application number: 24760401.0
(22) Date of filing: 21.02.2024
(51) Int. Cl.: A63F 9/02, A63F 9/00, A63F 9/24

(54) **GAME SYSTEM, GAME DEVICE, AND PROGRAM**

(30) Priority: 21.02.2023 JP 2023024963
(71) Applicant: Kabushiki Kaisha Dartslive D/B/A Dartslive Co., Ltd., Tokyo 141-0033 (JP); Sega Corporation, Tokyo 141-0033 (JP)
(72) Inventor: TAKAHISA, Koichi, Tokyo 141-0033 (JP)
(74) Representative: Yip, Matthew Wing Yu
(86) International application number: PCT/JP2024/006200
(87) International publication number: WO 2024/177103

(57) **Abstract**

Provided is a game system capable of reducing the cost of a game event. A game system according to an aspect of the present invention is a system including: a game device to play a dart game; a player terminal which a player uses; and a server device which is accessible to a storage unit to store dart game related information on a dart game played by a plurality of players. The game device includes: a game progressing unit which progresses each game of a dart game and records a result of each opponent; and a game result information providing unit which provides game result information, indicating a result of each opponent in the game, to the player terminal. The player terminal includes: a game result information acquiring unit which acquires the game result information provided by the game device; an opponent information acquiring unit which acquires opponent information indicating player identification information of each opponent in the game; and a game outcome information transmitting unit which sends game result information, indicating a game outcome including the game result information and the opponent information, to the server device. The server device includes: a game outcome information receiving unit which receives the game outcome information from the player terminal; and a management unit which records the received game outcome information in the dart game related information stored in the storage unit.

## Description

### Technical Field

The present invention relates to a game system, a game device and a program.

### Background Art

Dart game events have been held, where several tens to several hundreds or even more dart game devices are installed in a large site (e.g., exhibition hall), and many players who came to the venue sequentially play games using these dart game devices, and a winner is determined, for example.

Patent Literature 1, for example, discloses a game system including: a server device that manages a game event; and a game device which is used for a plurality of players participating in the game event to have a match, and which is connected to the server device via a communication network.

### Citation List

### Patent Literature

Patent Literature 1: Patent Publication JP-A-2015-36008

### Summary of Invention

### Technical Problem

To connect a dart game device to a communication network, such operations as setting each dart game device in the site and wiring a communication apparatus and each dart game device via cables or wirelessly are required. Performing such operations for many dart game devices installed in the site, however, generates enormous labor cost, time cost, financial cost, or the like.

With the foregoing in view, it is an object of the present invention to provide a game system which can reduce costs of a game event.

### Solution to Problem

A game system according to an aspect of the present invention includes: a game device to play a dart game; a player terminal which a player uses; and a server device which is accessible to a storage unit to store dart game related information on a dart game played by a plurality of players. The game device includes: a game progressing unit which progresses each game of a dart game and records a result of each opponent; and a game result information providing unit which provides game result information, indicating a result of each opponent in the game, to the player terminal. The player terminal includes: a game result information acquiring unit which acquires the game result information provided by the game device; an opponent information acquiring unit which acquires opponent information indicating player identification information of each opponent in the game; and a game outcome information transmitting unit which sends game result information, indicating a game outcome including the game result information and opponent information, to the server device. The server device includes: a game outcome information receiving unit which receives the game outcome information from the player terminal; and a management unit which records the received game outcome information in the dart game related information stored in the storage unit.

According to this configuration, the game device progresses each game of a dart game, records a result of each opponent, and provides the game result information indicating the result of each opponent in the game to the player terminal. The player terminal acquires the game result information provided by the game device, acquires the opponent information indicating a player identification information of each opponent in the game, and sends the game outcome information, indicating the game outcome including the game result information and the opponent information, to the server device. The server device receives the game outcome information from the player terminal, and records the received game outcome information in the game information stored in the storage unit. Thereby the dart game is played on the game device without the game device executing communication with the server device, and information on the result of this game is recorded in the game information recorded in the server device. Hence the event of the dart game can be managed without providing the game device with communication functions for the server device, and the costs of the event can be reduced accordingly.

### Advantageous Effects of Invention

According to the aspect of the present invention, a game system which can reduce the costs of a game event, can be provided.

### Brief Description of Drawings

[Figure 1] Figure 1 is a schematic diagram depicting a configuration of a game system 1.
[Figure 2] Figure 2 is a schematic front view depicting an example of an external view of a dart game device 10.
[Figure 3] Figure 3 is a block diagram depicting an example of a hardware configuration of the dart game device 10.
[Figure 4] Figure 4 is a functional block diagram depicting an example of functional units included in the dart game device 10.
[Figure 5] Figure 5 is a block diagram depicting an example of a hardware configuration of a computer 200.
[Figure 6] Figure 6 is a functional block diagram depicting an example of functional units included in a player terminal 20.
[Figure 7] Figure 7 is a functional block diagram depicting an example of functional units included in a server device 30.
[Figure 8] Figure 8 is a table indicating an example of a data structure of a player information DB 31a.
[Figure 9] Figure 9 is a table indicating an example of a data structure of a competition information DB 31b.
[Figure 10] Figure 10 is a table indicating an example of a data structure of a game information DB 31c.
[Figure 11] Figure 11 is a diagram depicting an example of an operation sequence related to processing which the game system 1 executes when a game starts.
[Figure 12] Figure 12 is a diagram depicting a screen G21, which is an example of a screen including information on a game.
[Figure 13] Figure 13 is a diagram depicting an example of a screen including a two-dimensional code.
[Figure 14] Figure 14 is a diagram depicting an example of an operation sequence related to processing which the game system 1 executes when a game is progressing and when the game ends.
[Figure 15] Figure 15 is a diagram depicting an example of a screen including a two-dimensional code.
[Figure 16] Figure 16 is a diagram depicting an example of a screen including various displays of opponent information and game result information.
[Figure 17] Figure 17 is a schematic diagram depicting a configuration of a game system 2.
[Figure 18] Figure 18 is a block diagram depicting an example of a hardware configuration of a dart game device 40.

### Description of Embodiments

### [Embodiment 1]

### (1) System overview

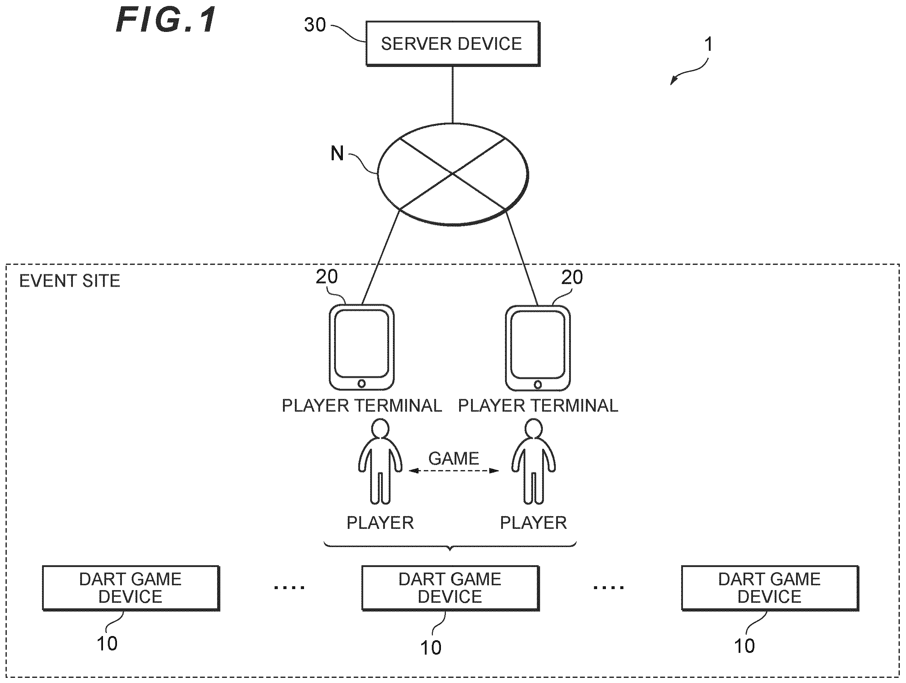

Figure 1 is a schematic diagram depicting a configuration of a game system 1. As illustrated in Figure 1, the game system 1 includes, for example, a plurality of dart game devices 10, a player terminal 20 which each player uses, and a server device 30. A site where the plurality of dart game devices 10 are installed is not especially limited, and may be a large scale event site (e.g., exhibition hall) or a store (e.g., dart bar, game center), for example. In Embodiment 1, an example where the plurality of dart game devices 10 are installed in an event site, where an event of a dart game participated by a plurality of players is held, will be described. The plurality of players play a dart game using any one of a dart game device 10 respectively. The player terminal 20 which each player uses may be configured to be communicable with the server device 30 via a communication network N (e.g., Internet). The dart game device 10, on the other hand, may be limited in communicating with the server device 30 via a communication network N, at least partially. The dart game device 10 need not always include functions to communicate with the server device 30 via the communication network N.

### (2) Configuration of dart game device 10

### (2-1) Hardware configuration

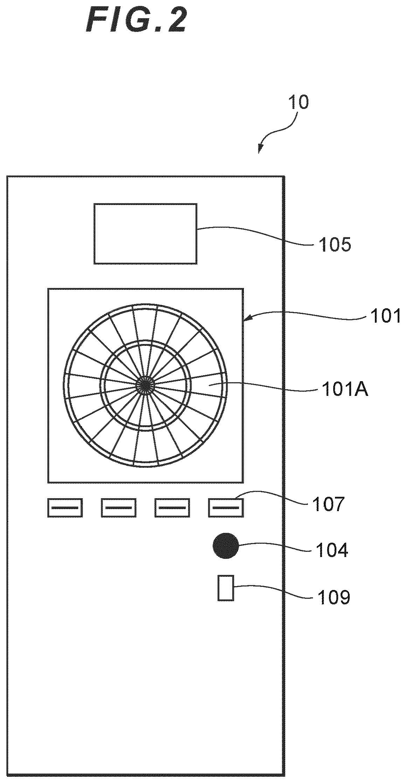

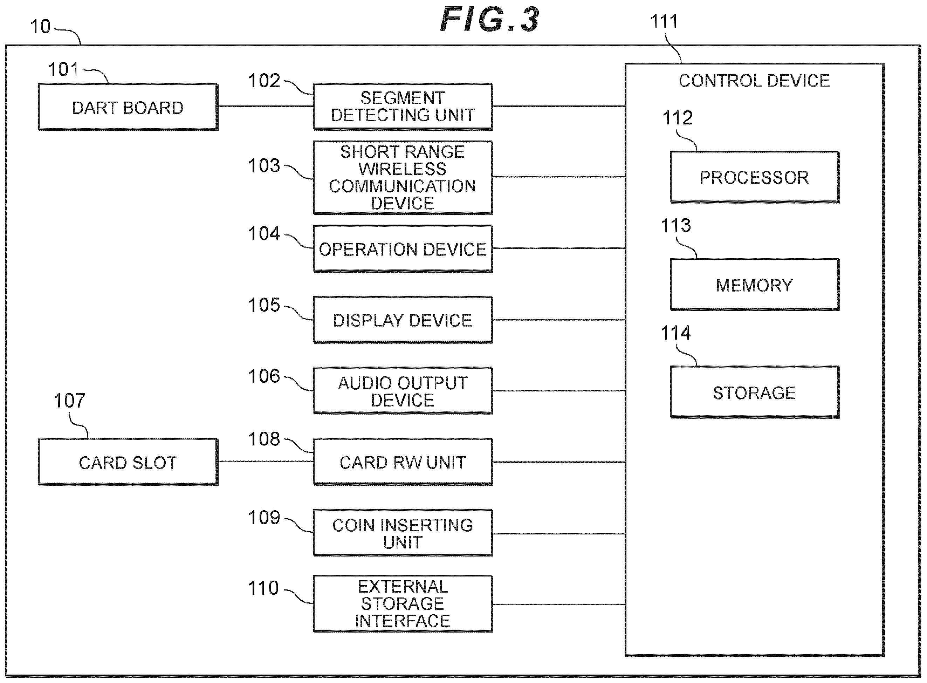

A configuration of the dart game device 10 according to Embodiment 1 will be described with reference to Figures 2 and 3. Figure 2 is a schematic front view depicting an example of an external view of the dart game device 10. Figure 3 is a block diagram depicting an example of a hardware configuration of the dart game device 10.

The dart game device 10 includes various components inside and outside a casing which is approximately rectangular-parallelepiped-shaped. The dart game device 10 includes, for example, a dart board 101, a segment detecting unit 102, a short range wireless communication device 103, an operation device 104, a display device 105, an audio output device 106, a card slot 107, a card RW unit 108, a coin inserting unit 109, an external storage interface 110, and a control device 111.

On the dart board 101, an approximately circular target 101A is disposed. On the target 101A, a plurality of segments, which are determined by the distance and direction from the center of the target 101A, are disposed. Each of these segments are demarcated by a frame erected on the target 101A. Each segment disposed on the target 101A includes a plurality of receiving holes which can receive a dart (an example of a thrown instrument). If a dart thrown by a player reaches any one of the receiving holes, the dart can be held in the receiving hole in a state where a part of the dart is inserted (stuck). The segment, including the receiving hole holding the dart, becomes a segment which the player hits by throwing a dart, and points scored in according to this segment are provided to the player.

The segment detecting unit 102 is for detecting a segment of the dart board 101 where the dart thrown by a player is struck, and a plurality of segment detecting units 102 are disposed corresponding to each segment of the dart board 101. In Embodiment 1, when a dart thrown by a player is struck in a specific segment of the dart board 101, this segment of the dart board 101 moves slightly backward due to the impact of the dart. The segment detecting unit 102 detects the displacement of this segment of the dart board 101, and sends a detection signal indicating a segment struck by a dart to the control device 111. The segment detecting unit 102 may be configured as a membrane switch is constituted of: a plurality of electric contacts which is activated by pressure applied from the outside; and a membrane sheet, which are layered.

The short range wireless communication device 103 is a communication interface to perform communication with the player terminal 20. Based on control by the control device 111, the short range wireless communication device 103 communicates with the player terminal 20 and the like located within a predetermined range from the dart game device 10. The communication method used by the short range wireless communication device 103 is not especially limited, as long as short range wireless communication is possible, and may be either one of cable communication and wireless communication, and may be Bluetooth (registered trademark), Wi-Fi (registered trademark) or the like, for example.

The operation device 104 is for a player to perform various operations, and is constituted of operation buttons and the like disposed on an operation panel, for example. The operation device 104 is operated by a player when a selection is made from various dart games (e.g., zero one, cricket), for example.

The display device 105 is an example of an output device, and has a function to display various screens related to the dart game based on the display data supplied by the control device 111. Specifically, the display device 105 may be a liquid crystal display, an organic **EL** display, or the like, for example.

The audio output device 106 is another example of an output device, and has a function to output sound related to the dart game based on audio signals supplied by the control device 111. Specifically, the audio output device 106 is constituted of a speaker that amplifies audio signals using a digital amplifier or the like, and outputs sound, for example.

The card slot 107 is a slot to insert a player card owned by a player. The dart game device 10 of Embodiment 1 includes 4 card slots 107, so that a maximum of 4 teams can play the game (the maximum number of plays is not limited). The player card is an example of a medium, and may be configured such that the identification information (ID) of the player, history of stats of past games, and the like, are recordable, for example. The card RW unit 108 is configured such that the information can be read from or written to the player card inserted into the card slot 107.

The coin inserting unit 109 includes a slot to insert a coin, and a sensor to detect a coin inserted into the slot. In Embodiment 1, a game can be played by a player inserting a predetermined number of coins into the coin slot. However the dart game device 10 may also be configured so that a game can be played based on such a method as electronic settlement, using a prepaid payment system (e.g., electronic money).

The external storage interface 110 is an interface that is connectible to an external storage, such as flash memory (USB memory), for example. The functions of the dart game device 10 of Embodiment 1 may be implemented by a setup file which is read from the external storage connected to the external storage interface 110.

The control device 111 includes a processor 112, a memory 113, and a storage 114, and comprehensively controls various components included in the dart game device 10.

The processor 112 may be configured as a central processing unit (CPU), and controls various processing steps in the dart game device 10 by executing programs stored in the memory 113. For example, various functional units included in the dart game device 10 may be implemented as programs which are temporarily stored in the memory 113, and then run on the processor 112.

The memory 113 is a storage medium including a random access memory (RAM) and the like, and functions as a data storage area and work area of the processor 112, for example. The memory 113 temporarily stores data which is required for the processor 112 to execute programs.

The storage 114 is a non-volatile storage medium, such as a hard disk drive (HDD), for example. The storage 114 stores an operating system and various programs. The storage 114 may also store various data bases (DB) and the like. These programs and data are loaded to the memory 113 when necessary, and are referred to by the processor 112. These programs may be storable in a non-transitory storage medium, such as a USB memory and CD-ROM. These programs may also be supplied to the storage 114 via an arbitrary transmission medium (e.g., communication network, radio waves) which can transmit the programs. An aspect of the present invention may be implemented by data signals embedded in the carrier waves, where these programs are embodied by electronic transmission.

### (2-2) Functional configuration

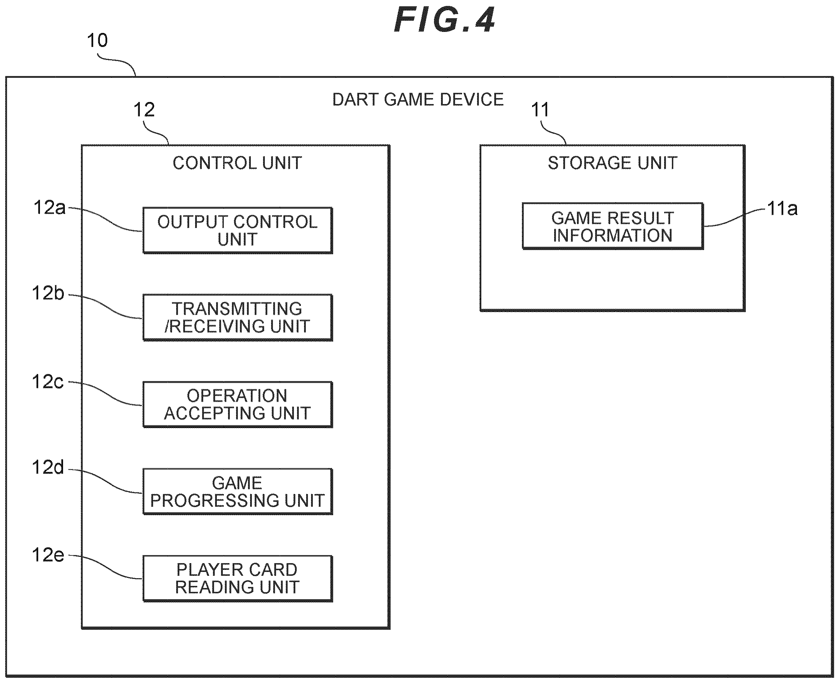

Figure 4 is a functional block diagram depicting an example of functional units included in the dart game device 10. As functional units implemented by the processor 112, the memory 113 and the like of the control device 111, the dart game device 10 includes a storage unit 11 and a control unit 12, for example. The control unit 12 includes an output control unit 12a, a transmitting/receiving unit 12b, an operation accepting unit 12c, a game progressing unit 12d, and a player card reading unit 12e.

The storage unit 11 stores data required for processing by the dart game device 10. The storage unit 11 stores game result information 11a, which indicates the result of each player in each game of the dart game, for example. The game result information 11a may include, for example, outcomes of games and stats (scores) indicating the points scored in each game, the game time, reward information (award information) acquired by a player, and the like.

The output control unit 12a controls output by various output devices. The output control unit 12a may control the display by the display device 105, for example. Specifically, the output control unit 12a may generate display data on a predetermined screen which is displayed on the display device 105, and display this predetermined screen on the display device 105 based on this display data. The output control unit 12a may also control audio output by the audio output device 106, for example. Specifically, the output control unit 12a may generate predetermined audio data which the audio output device 106 outputs, and cause the audio output device 106 to output a predetermined sound based on this audio data.

The output control unit 12a may display, as an example of a game result information providing unit, a two-dimensional code, including game result information of each opponent in the game, on the display device 105. Further, the output control unit 12a may display, as an example of opponent information providing unit, a two-dimensional code, including opponent information indicating player identity information of each opponent in the game, on the display device 105.

The transmitting/receiving unit 12b transmits/receives various information to/from player terminals 20 located in a predetermined range from the dart game device 10 via the short range wireless communication device 103. The transmitting/receiving unit 12b may send, as an example of the opponent result information providing unit, the opponent result information to the player terminal 20 via the short range wireless communication, for example. Further, the transmitting/receiving unit 12b may send, as an example of the opponent information providing unit, the opponent information to the player terminal 20 via the short range wireless communication, for example.

The operation accepting unit 12c accepts an operation by the player via the operation device 104 or the like. For example, the operation accepting unit 12c accepts an operation to input competition information, an operation to display a two-dimensional code, and the like, as operations related to the progress of the dart game.

The game progressing unit 12d executes the control to progress the dart game in the dart game device 10. The game progressing unit 12d detects a segment of the dart board 101 to which a dart thrown by a player is stuck, and the stats generated based on this detection are recorded in the game result information 11a stored in the storage unit 11. Further, the game progressing unit 12d determines the outcome of each opponent based on the stats, and records the information on this outcome in the game result information 11a stored in the storage unit 11. The game progressing unit 12d also determines the game time and reward information (award information) acquired by a player, and records this information in the game result information 11a stored in the storage unit 11.

The player card reading unit 12e controls the card RW unit 108 to read the player card inserted into the card slot 107, and acquire such information as the player ID and stats recorded on the player card. As an example of the opponent information acquiring unit (player ID acquiring unit), the player card reading unit 12e may acquire the player ID of the opponent information by reading the player card, for example.

### (3) Player terminal 20 and server device 30

### (3-1) Hardware configuration

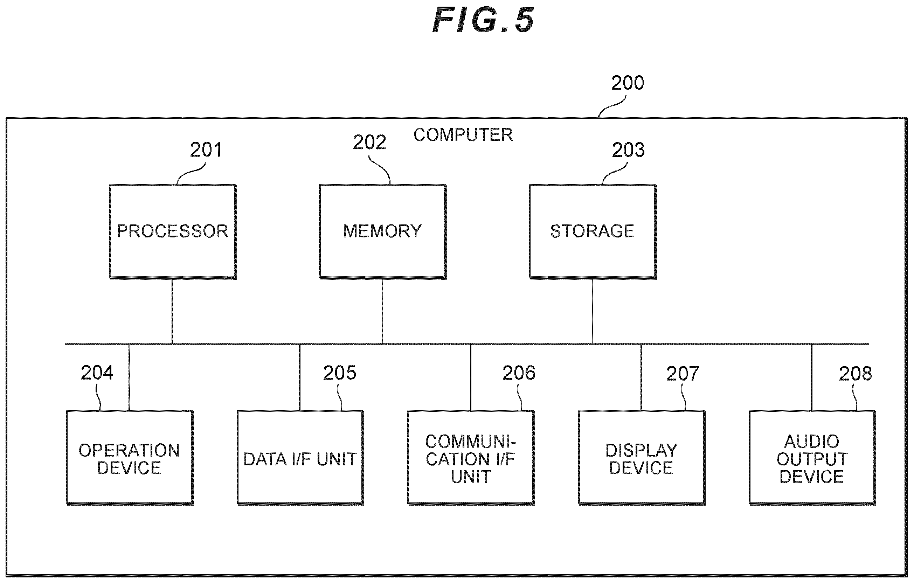

The hardware configuration of the player terminal 20 and the server device 30 will be described respectively. The player terminal 20 and the server device 30 can be configured by one or a plurality of computers 200 respectively. Figure 5 is a block diagram depicting an example of the hardware configuration of the computer 200.

As illustrated in Figure 5, the computer 200 includes a processor 201, a memory 202, a storage 203, an operation device 204, a data I/F unit 205, a communication I/F unit 206, a display device 207, and an audio output device 208.

The processor 201 may be configured as a central processing unit (CPU), and controls various processing steps in the computer 200 by executing programs stored in the memory 202. For example, various functional units included in the player terminal 20 and various functional units included in the server device 30 may be implemented as programs which are temporarily stored in the memory 202, and then run on the processor 201.

The memory 202 is a storage medium including a random access memory (RAM) and the like, and functions as a data storage area and a work area of the processor 201, for example. The memory 202 temporarily stores data which is required for the processor 201 to execute the programs.

The storage 203 is a non-volatile storage medium, such as a hard disk drive (HDD), for example. The storage 203 stores an operating system and various programs. The storage 203 may also store various data bases (DB) and the like. These programs and data are loaded to the memory 202 when necessary, and are referred to by the processor 201. These programs may be storable in a non-transitory storage medium, such as a USB memory and CD-ROM. These programs may also be supplied to the storage 203 via an arbitrary transmission medium (e.g., communication network, radio waves) which can transmit the programs. An aspect of the present invention may be implemented by data signals embedded in the carrier waves, where these programs are embodied by electronic transmission.

The operation device 204 is for a user (player, or a service provider, such as an event manager) to perform various operations, and is constituted of a keyboard, a mouse, a touch panel, various sensors, a wearable device, and the like, for example. The operation device 204 may be connected to the computer 200 via such an interface as a universal serial bus (USB), for example.

The data I/F unit 205 is a device for inputting data from outside the computer 200. An example of the data I/F unit 205 is a drive device to read data stored on various storage media. The data I/F unit 205 may be installed outside the computer 200. In this case, the data I/F unit 205 is connected to the computer 200 via such an interface as USB, for example.

The communication I/F unit 206 is a device for performing data communication, via a communication network N, with a device outside the computer 200 using a cable or wireless communication. The communication I/F unit 206 may be installed outside the computer 200. In this case, the communication I/F unit 206 is connected to the computer 200 via such an interface as USB, for example.

The display device 207 is an example of an output device, and is a device to display various information. Examples of the display device 207 are a liquid crystal display, an organic EL display, a display of a wearable display, and the like. The display device 207 may be installed outside the computer 200. In this case, the display device 207 is connected to the computer 200 via a display cable, for example.

The audio output device 208 is another example of an output device, and has a function to output sound related to the dart game based on audio signals supplied by the processor 201. Specifically, the audio output device 208 is constituted of a speaker that amplifies audio signals using a digital amplifier or the like, and outputs sound, for example.

Each player terminal 20 and server device 30 may not include a part of the composing elements of the computer 200 described above, or may include elements other than these composing elements.

### (3-2) Functional configuration of player terminal 20

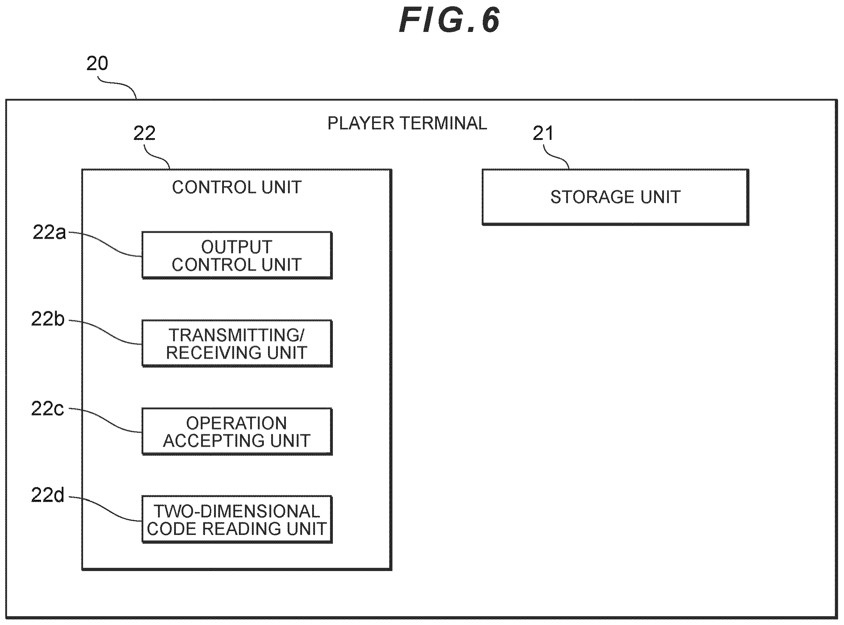

Figure 6 is a functional block diagram depicting an example of functional units included in the player terminal 20. As functional units implemented by the processor 201, the memory 202 and the like of the computer 200, the player terminal 20 includes a storage unit 21 and a control unit 22, for example. The control unit 22 includes an output control unit 22a, a transmitting/receiving unit 22b, an operation accepting unit 22c, and a two-dimensional code reading unit 22d.

The storage unit 21 stores data required for processing by the player terminal 20. The storage unit 21 may store the result information received from the dart game device 10, for example. The storage unit 21 may also store a player ID, for example.

The output control unit 22a controls output by various output devices. The output control unit 22a may control the display by the display device 207, for example. Specifically, the output control unit 22a may generate display data on a predetermined screen which is displayed on the display device 207, and display this predetermined screen on the display device 207 based on this display data. The output control unit 22a may also control audio output by the audio output device 208, for example. Specifically, the output control unit 22a may generate predetermined audio data which the audio output device 208 outputs, and cause the audio output device 208 to output a predetermined sound based on this audio data.

The transmitting/receiving unit 22b transmits/receives various information to/from the dart game devices 10 located in a predetermined range from the player terminal 20 via the communication I/F unit 206. The transmitting/receiving unit 22b also transmits/receives various information to/from the server device 30 via the communication I/F unit 206. The transmitting/receiving unit 22b may acquire, as an example of the game result information acquiring unit, the game result information by receiving the game result information which is sent from the dart game device 10 via the short range wireless communication, for example. The transmitting/receiving unit 22b may acquire, as an example of the opponent information acquiring unit, the opponent information by receiving the opponent information which is sent from the dart game device 10 via the short range wireless communication, for example. The transmitting/receiving unit 22b may send, as an example of the game outcome information transmitting unit, the game outcome information indicating the game outcome to the server device 30, for example. The game outcome information may include the game result information and the opponent information, for example. The transmitting/receiving unit 22b may, as an example of the opponent information transmitting unit, send the opponent information to the server device 30 at a predetermined timing, for example. This predetermined timing is not especially limited, but may be a timing before sending the game result information to the server device 30, or may be a timing when the game starts in the dart game device 10, or may be an arbitrary timing during the game progressing in the dart game device 10, for example.

The operation accepting unit 22c accept an operation by the player via the operation device 204 or the like. For example, the operation accepting unit 22c accepts an operation related to login, an operation to input various information, an operation to read a two-dimensional code, and the like, as operations related to the progress of the dart game.

The two-dimensional code reading unit 22d reads a two-dimensional code displayed on the dart game device 10, so as to acquire various information included in this two-dimensional code. The two-dimensional code reading unit 22d, may acquire, as an example of the game result information acquiring unit, the game result information included in the two-dimensional code by reading the two-dimensional code displayed on the dart game device 10. The two-dimensional code reading unit 22d may also acquire, as an example of the opponent information acquiring unit, the opponent information included in the two-dimensional code by reading the two-dimensional code displayed on the dart game device 10, for example.

### (3-3) Functional configuration of server device 30

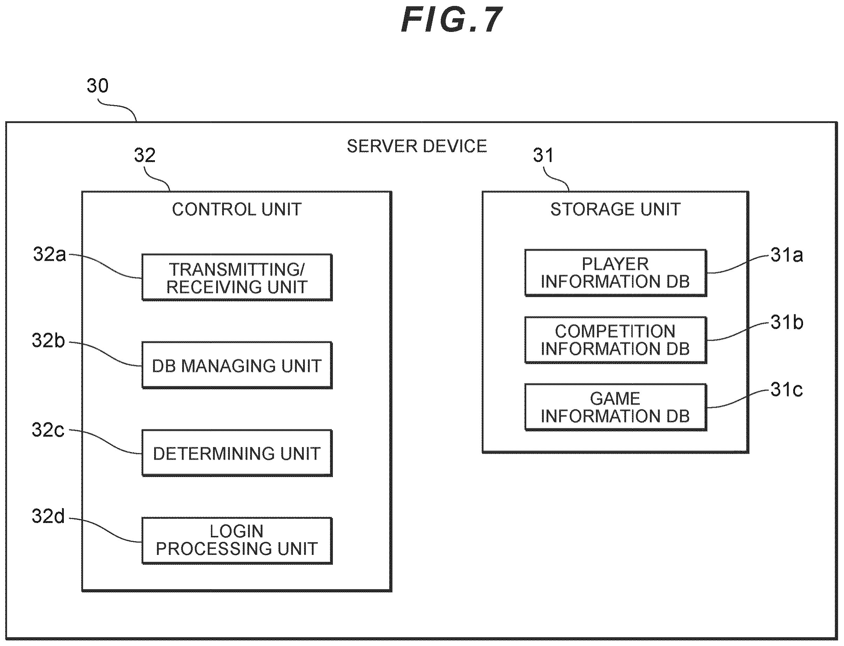

Figure 7 is a functional block diagram depicting an example of functional units included in the server device 30. As functional units implemented by the processor 201, the memory 202 and the like of the computer 200, the server device 30 includes a storage unit 31 and a control unit 32, for example. The control unit 32 includes a transmitting/receiving unit 32a, a DB managing unit 32b, a determining unit 32c and a login processing unit 32d.

The storage unit 31 stores dart game related information, that is, such information related to the dart game as player information, competition information and game information. Specifically, the storage unit 31 stores various databases (DBs) as data required for processing by the server device 30. The storage unit 31 stores player information DB 31a, competition information DB 31b and game information DB 31c, for example. These databases are managed by the DB managing unit 32b.

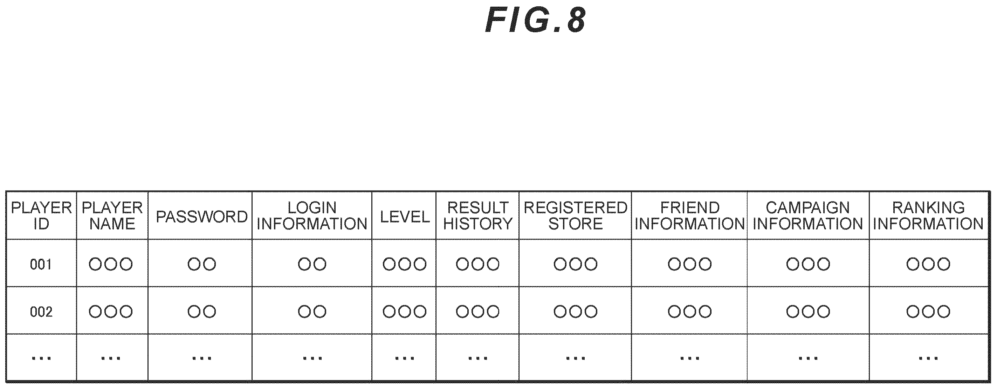

Figure 8 is a table indicating an example of data structure of the player information DB 31a. The player information DB 31a is a database to manage information related to a player. As indicated in Figure 8, in the player information DB 31a, "player ID", "player name", "password", "login information", "level", "result history", "registered store", "friend information", "campaign information" and "ranking information" are recorded, for example. The "player ID" is identification information (ID) to identify the player. The "player name" is a name of the player. The "password" is a password to login, or the like, to the server device 30 from the player terminal 20. The "login information" is information on login processing, and may be, for example, a login ID or the like that is issued when the server device 30 allows login from the player terminal 20. The "level" is an index indicating the ability of the player, and may be calculated, for example, based on a history of the result in previous games (e.g., outcomes of games, stats (score) indicating the points in games) using an arbitrary calculation method. The "result history" is information indicating the history of the result of the player in previous games. The "registered store" is an ID (store ID) to identify the store associated with the player, for example. The store ID may be the ID of a store that the player selected and uses often, or may be a store ID of a store where a predetermined dart game device 10 played by the player is installed, and be automatically assigned. The "friend information" may include player IDs of players (friends) registered as friends. The friend is a player who is registered as another player related to this player. A friend who played a game with the players may be registered or an arbitrary player specified by the player, regardless whether the player played a game or not. The "campaign information" may include records related to various campaigns. The campaign may be an event where a predetermined privilege is granted based on the cumulative score, a number of registered friends, or the like. The "ranking information" is information indicating the rank of the player in various rankings. The contents of the rankings are not especially limited, but may include ranking by stats (scores), ranking by rewards (awards), and the like, for example. The ranking may be a ranking among players associated with a predetermined store (instore ranking).

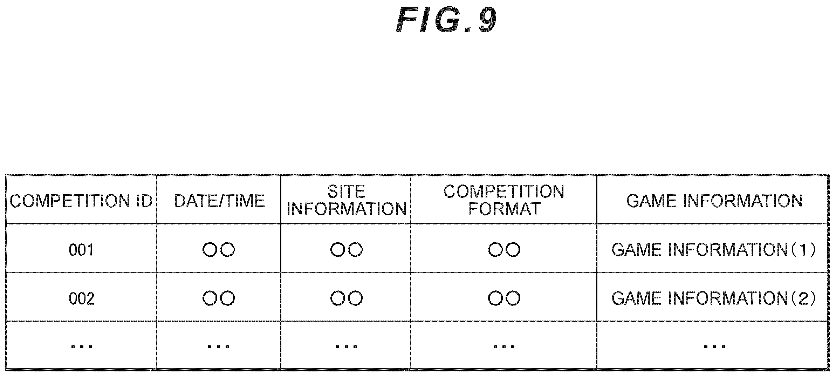

Figure 9 is a table indicating an example of data structure of the competition information DB 31b. The competition information DB 31b is a database to manage information related to the competition. As indicated in Figure 9, in the competition information DB 31b, a "competition ID", "date/time", "site information", "competition format", and "game information" are recorded, for example. The "competition ID" is identification information (ID) to identify the competition. The "date/time" is information to indicate the data/time when the competition is held. The "site information" is information related to the site where the content is held (e.g., site name, site ID). The "content format" is information to indicate the format of the competition (e.g., tournament/round robin, singles/doubles, level of competition). The "game information" is information to specify the game information associated with this content, out of the game information for each competition included in the game information DB 31c.

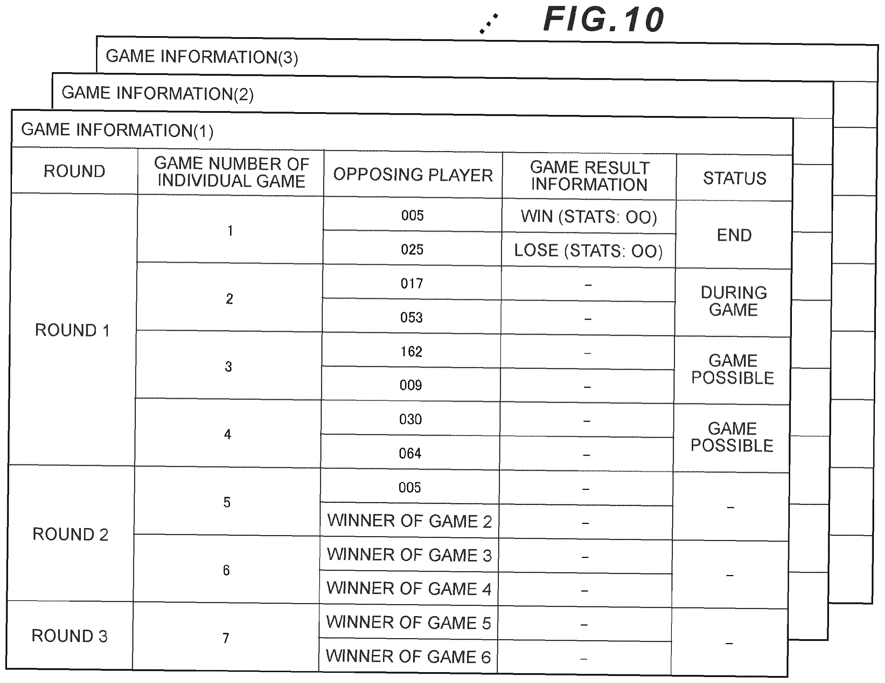

Figure 10 is a table indicating an example of data structure of the game information DB 31c. The game information DB 31c is a database for each competition, to manage information, related to games included in this competition. As indicated in Figure 10, in the game information DB 31c, a "round", "game number of individual game", "opposing player", "outcome", "game result information" and "status" are recorded, for example. The "round" is information to indicate a number of rounds of the game in a tournament type competition. The "game number of individual game" is information to indicate the sequence of each game included in the competition. The "opposing player" is information to indicate an opponent (e.g., player ID) in each game. The "game result information" is information to indicate the result (outcome, stats) of each opponent in the given game. The "status" is information to indicate progress of the given game. The example of the data structure of the game information DB 31c in Figure 10 is an example when the competition is in tournament format, but in the game information DB 31c, game information of a competition in other formats (e.g., round robin) may also be recorded using data structure matching with the format.

Referring back to Figure 7, the transmitting/receiving unit 32a transmits/receives various information to/from the player terminal 20 via the communication I/F unit 206. The transmitting/receiving unit 32a receives, as an example of the game outcome information receiving unit, the game outcome information from the player terminal 20, for example. The game outcome information may include the game result information and the opponent information, for example. The transmitting/receiving unit 32a may receive, as an example of the opponent information receiving unit, the opponent information from the player terminal 20 at a predetermined timing. This predetermined timing is not especially limited, but may be a timing before receiving the game result information from the player terminal 20, such as a timing when the game starts in the dart game device 10, or an arbitrary timing during the game progressing in the dart game device 10, for example.

The determining unit 32c executes various determining processing. The determining unit 32c determines consistency with the game information DB 31c stored in the storage unit 31, for a combination of players (opponents) indicated in the opponent information (including information stored in the game outcome information) received from the player terminal 20. Specifically, the determining unit 32c determines whether a combination of players (opponents), indicated in the opponent information received from the player terminal 20, matches with a combination of players (opponents) in any one of the games included in the game information DB 31c. For example, if these combinations of players match, the determining unit 32c determines that the combination of the players (opponents), indicated in the opponent information received from the player terminal 20 is correct, (consistent), and if not, the determining unit 32c determines that the combination of players (opponents), indicated in the opponent information received from the player terminal 20, is not correct (not consistent).

The login processing unit 32d executes processing related to login. For example, when a login request is received from the player terminal 20, the login processing unit 32d executes a predetermined login processing. As login processing, the login processing unit 32d cross checks a combination of a player ID and a password, included in the login request, against the information recorded in the player information DB 31a, for example. If the combination of the player ID and password matches with any one of the information recorded in the player information DB 31a, the login processing unit 32d allows login, and if there is no match, the login processing unit 32d disallows login. In the case of allowing login, the login processing unit 32d issues a login ID, and records the login ID in the login information of the player information DB 31a.

### (4) Operation

### (4-1) Start of game

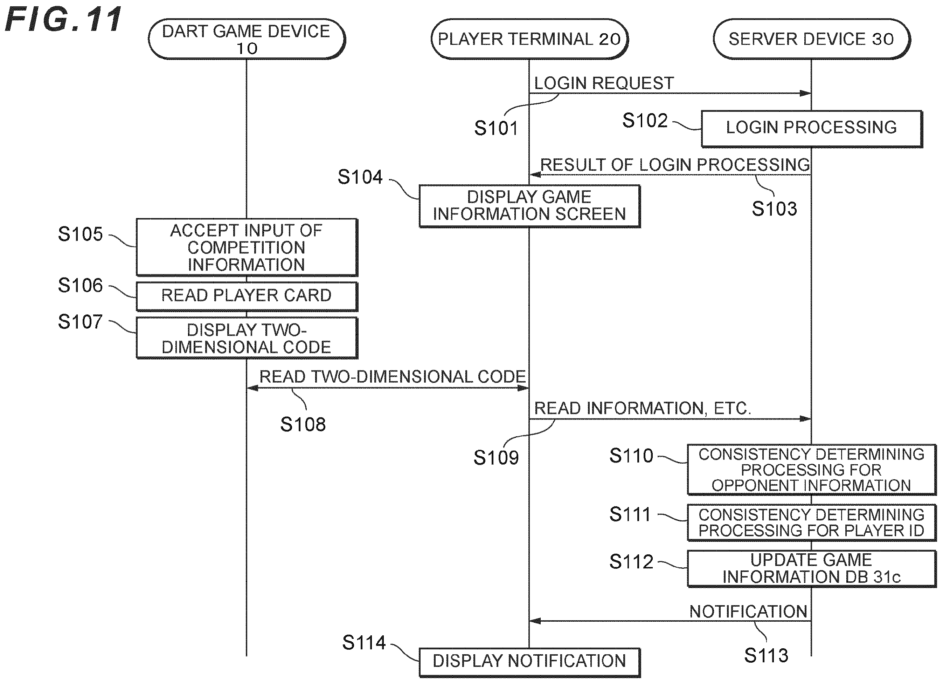

Figure 11 is a diagram depicting an example of an operation sequence related to processing which the game system 1 executes when a game starts.

### (S101)

The player terminal 20 sends a login request to the server device 30 responding to operation performed by the player on the player terminal 20. In this operation, the player inputs a player ID, a password, and the like, for example. The player terminal 20 acquires the inputted player ID, a password, and the like. The player terminal 20 may acquire a player ID, password, and the like which have been stored in advance in the storage unit 21 of the player terminal 20.

### (S102)

When the login request is received from the player terminal 20, the server device 30 executes the predetermined login processing. In the login processing, the server device 30 cross checks the combination of the player ID and the password, included in the login request, against the information recorded in the player information DB 31a, for example. If the combination of the player ID and the password matches with any one of the information recorded in the player information DB 31a, the server device 30 allows login, and if there is no match, the server device 30 disallows login. In the case of allowing login, the server device 30 issues a login ID and records the login ID in the login information of the player information DB 31a.

### (S103)

The server device 30 sends the result of the login processing in step S102 to the player terminal 20. For example, in the case of allowing login, the server device 30 notifies the player terminal 20 that login in allowed along with the login ID. Once login is allowed, various functions of the application, including various processing to be described below, can be accessed in the player terminal 20. In the case of disallowing login, on the other hand, the server device 30 notifies the player terminal 20 that login is disallowed. If login is disallowed, the use of at least a part of various functions of the application is limited in the player terminal 20.

### (S104)

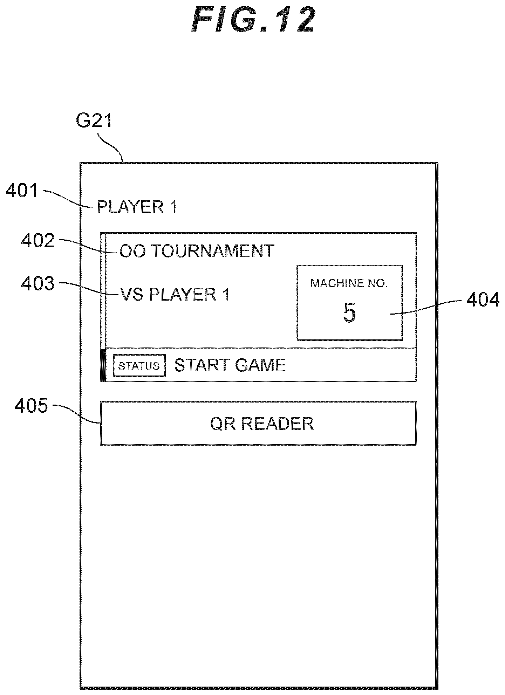

The player terminal 20 displays a screen, including information on the game (game information screen), on the display device 207, for example. Figure 12 is a diagram depicting a screen G21 which is an example of this screen. The screen G21 includes a player name 401 of this user, a competition name 402 to be participated in, a player name 403 of the opponent, and a number 404 of a dart game device 10 used to play the game, and a selection unit 405 to start a QR reader. At least a part of this information may be acquired from the server device 30.

Each player refers to the screen G21 to confirm the dart game device 10 where a target game is scheduled, for example, and moves to that dart game device 10. Each player may move to this dart game device 10 after confirming the previously acquired information or the displays on the site.

### (S105)

The dart game device 10 accepts input of information (competition information) related to the competition, responding to the operation by the opposing player. The competition information may be inputted by being selected from choices displayed on the dart game device 10. The information on each choice is stored in the storage unit 11 of the dart game device 10. The competition information to be inputted may be items to be recorded in the competition information DB 31b, for example, and may be a competition format (e.g., tournament/round robin, singles, doubles, level of competition). The competition information to be inputted may also be competition ID, date/time, site information, and the like.

### (S106)

When each player inserts their player card into the card slot 107 of the dart game device 10, the dart game device 10 acquires each player ID by reading the inserted player card.

### (S107)

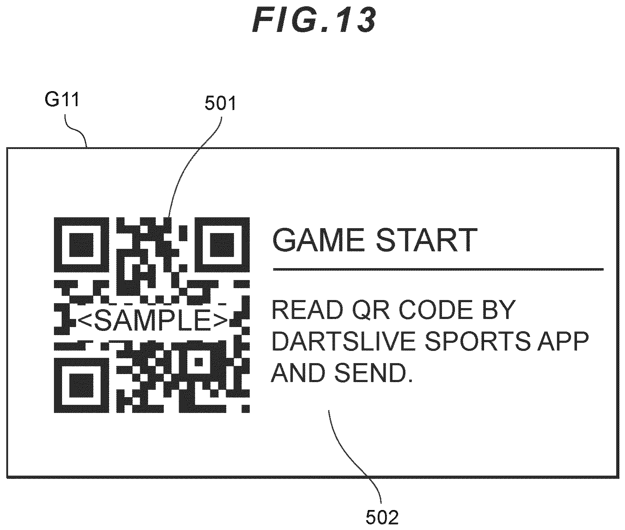

Then the dart game device 10 displays a screen, including a two-dimensional code, on the display device 105, for example. Figure 13 is a diagram depicting a screen G11, which is an example of this screen. The screen G11 includes a two-dimensional code 501 and an instruction 502 on reading the two-dimensional code. For example, the two-dimensional code 501 is displayed as a QR code (registered trademark). For example, the dart game device 10 includes the content information, inputted in step S105, in this two-dimensional code 501. Further, the dart game device 10 includes information (opponent information), which indicates player identification information of the opponent in the game, in this two-dimensional code 501, for example. This opponent information includes each player ID acquired from the player card in step S106, for example. The dart game device 10 may also include an ID to identify the dart game device 10, and/or an ID to identify the location where the dart game device 10 is installed, in the two-dimensional code 501, for example.

### (S108)

Then at least any one of the players (opponents) operates their player terminal 20, for example, so that the two-dimensional code 501 displayed on the dart game device 10 is read by this player terminal 20. Thereby the player terminal 20 acquires information (e.g., competition information, opponent information) included in the two-dimensional code 501.

### (S109)

Then responding to the player selecting the transmission or the like, the player terminal 20 sends the read information (e.g., competition information, opponent information), acquired by reading the two-dimensional code 501, to the server device 30, along with the login ID received in step S103. The server device 30 receives the login ID, the read information, and the like sent from the player terminal 20.

### (S110)

The server device 30 executes the determining processing to determine consistency of the opponent information received from the player terminal 20. Specifically, the server device 30 determines whether a combination of players (opponents), indicated in the opponent information received from the player terminal 20, matches with a combination of players (opponents) in any one of the games included in the game information DB 31c (or only in a specific game, such as a game of which status is "during game"). For example, if these combinations of players match, the server device 30 determines that the combination of the players (opponents), indicated in the opponent information received from the player terminal 20, is correct (consistent), and if there is no match, the server device 30 determines that the combination of the players (opponents), indicated in the opponent information received from the player terminal 20, is not correct (not consistent).

In the processing in step S110, the server device 30 may execute processing to narrow down the target competitions and game information associated with these competitions, based on the competition information received from the player terminal 20. In other words, the server device 30 may specify a competition corresponding to the competition information received from the player terminal 20 with reference to the competition information DB 31b, and extract the game information, associated with the specified competition, from the game information DB 31c. Then the server device 30 may determine whether a combination of players (opponents), indicated in the opponent information received from the player terminal 20, matches with a combination of players (opponents) indicated in any game included in the extracted game information.

### (S111)

The server device 30 determines consistency of the player ID, included in the opponent information received from the player terminal 20, with the information related to the login processing. For example, the server device 30 specifies the player ID associated with the login ID received from the player terminal 20 in step S109, with reference to the player information DB 31a. Then the server device 30 compares the specified player ID and the player ID included in the opponent information received from the player terminal 20 in step S109.

If these player IDs match, the server device 30 determines that the player ID received from the player terminal 20 matches with the information related to the login processing (consistent). Thereby it can be estimated that the player card read by the dart game device 10 in step S106 is valid (the player card owned by the player which uses the player terminal 20 to which login was allowed in step S102).

If these player IDs do not match, on the other hand, the server device 30 determines that the player ID received from the player terminal 20 does not match with the information related to the login processing (not consistent). Thereby it can be estimated that the player card read by the dart game device 10 in step S106 is not valid (it is not the player card owned by the player who uses the player terminal 20 to which login was allowed in step S102).

### (S112)

Then the server device 30 updates the game information DB 31c. Specifically, in the game information DB 31c, the server device 30 updates "status" corresponding to the game specified by the competition information and the opponent information received in step S109, to information indicating "during game" or the like.

In a case where a predetermined time has elapsed since executing processing related to the start of the game, such as update of the game information DB 31c, the server device 30 may send a predetermined alert to a player terminal 20 which an opposing player uses, or to an arbitrary information processing device used by an event manager or the like. Then the player or the event manager can be notified that the game is taking a long time, that the game is not progressing for a reason, or the like, and the event can be managed smoothly.

### (S113)

The server device 30 sends a predetermined notification to the player terminal 20. This notification may include an instruction to start the game. Further, this notification may include content indicating the result of the processing to determine the consistency in step S110 (whether the combination of players (opponents) indicated in the opponent information received from the player terminal 20 is correct). This notification may also include content indicating the result of processing to determine the consistency in step S111 (whether the player ID received from the player terminal 20 matches with the information related to the login processing).

The server device 30 may send this predetermined notification to a player terminal 20 other than the player terminal 20 which sent the competition information and the opponent information in step S109 (e.g., to a player terminal 20 which the opposing player uses). The server device 30 may also send the predetermined notification to a player terminal 20 used by the opposing player in a game which is in a predetermined relationship with the game to be started (e.g., a game preformed after the next game, or a game included in the same tournament or round robin). For example, the server device 30 may send a notification including information that the previous game started, or information on which dart game device 10 will schedule a game, to the player terminal 20 used by an opposing player after the next game.

### (S114)

The player terminal 20 displays the predetermined notification received from the server device 30. Thereby the player can recognize, through the content of the notification displayed on the player terminal 20, the instruction to start the game, whether the combination of players (opponents) is correct, whether the player ID based on the player card matches with the login processing, and the like. Thereby the processing, that is executed when the game starts, is completed.

### (4-2) Progress of game to end of game

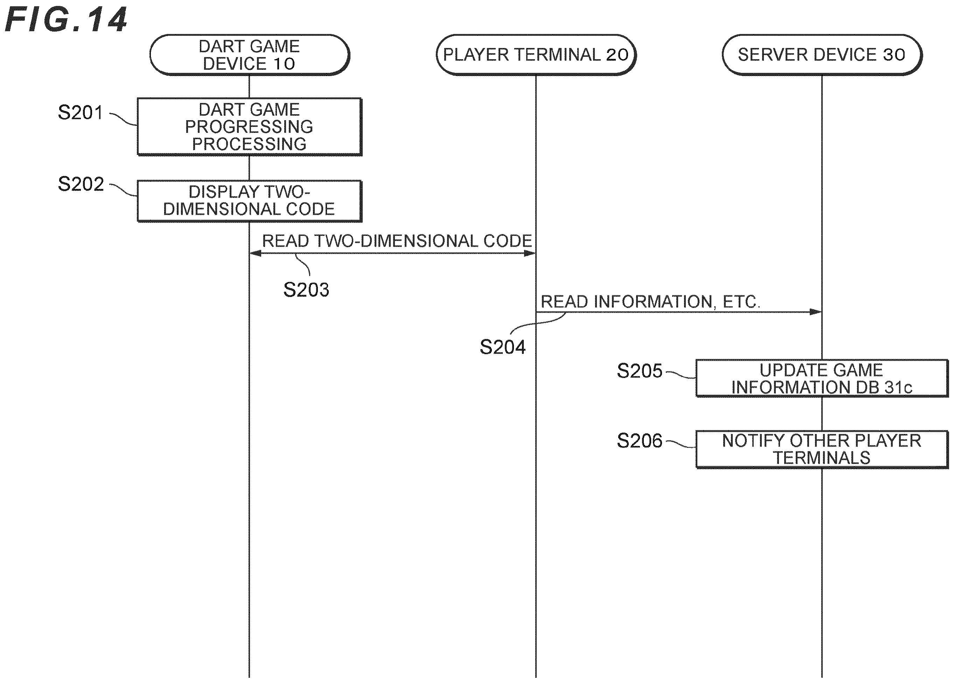

Figure 14 is a diagram depicting an example of an operation sequence related to processing which the game system 1 executes when a game is progressing and a game ends.

### (S201)

The dart game device 10 executes processing to progress the dart game. In this progress processing, the dart game device 10 detects a segment of the dart board 101 where the dart thrown by the player sticks, and records the stats, generated based on this detection, in the game result information 11a stored in the storage unit 11. The dart game device 10 also determines the outcome of each opponent based on the stats, and records this information on outcome in the game result information 11a stored in the storage unit 11.

### (S202)

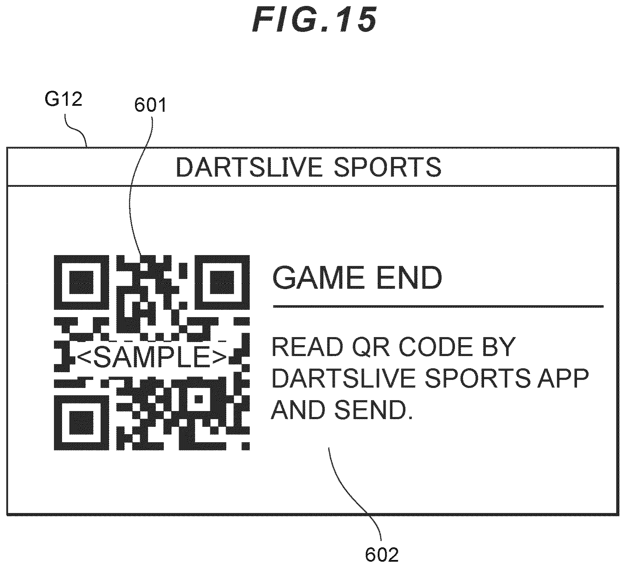

When each game of the dart game ends, that is, when the above mentioned progress processing in step S201 ends, the dart game device 10 displays a screen including a two-dimensional code on the display device 105. Figure 15 is a diagram depicting a screen G12, which is an example of this screen. The screen G12 includes a two-dimensional code 601 and an instruction 602 on reading the two-dimensional code. For example, the two-dimensional code 601 is displayed as a QR code. The dart game device 10 includes the game result information, generated in step S201, in this two-dimensional code 601. Further, the dart game device 10 includes information (opponent information), which indicates player identification information of the opponent in the game, in this two-dimensional code 601, for example. This opponent information includes each player ID acquired from the player card in step S106, for example. The dart game device 10 may also include an ID to identify the dart game device 10 and/or an ID to identify the location where the dart game device 10 is installed, in the two-dimensional code 501, for example.

### (S203)

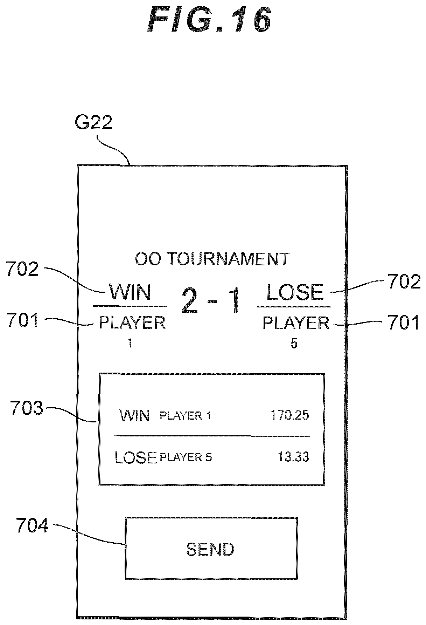

Then at least any one of the players (opponents) operate their player terminals 20, for example, so that the two-dimensional code 601 displayed on the dart game device 10 is read by this player terminal 20. Then the player terminal 20 acquires the game result information and the opponent information included in the two-dimensional code 601. Thereby the player terminal 20 displays a screen G22 indicated in Figure 16, for example. The screen G22 includes various displays of the opponent information and the game result information. Specifically, the screen G22 includes opponent information 701, outcome 702 and stats 703. The screen G22 also includes a transmission selecting unit 704.

### (S204)

Responding to the player selecting the transmission selecting unit 704 on the screen G22, the player terminal 20 sends the read information (game result information and opponent information), and the like acquired by reading the two-dimensional code 601 to the server device 30. The server device 30 receives the read information and the like sent from the player terminal 20.

### (S205)

The server device 30 updates the game information DB 31c. Specifically, in the game information DB 31c, the server device 30 updates "game result information" corresponding to the game specified by the opponent information received in step S204, to the game result information received in step S204. Further, in the game information DB 31c, the server device 30 updates "status" corresponding to this game to information indicating "game end", or the like.

Some players intentionally play at a lower level for a predetermined period just before an event so as to lower their level managed by the server device 30, then play at their actual level in the event, so as to unfairly achieve a high result. To prevent such cases, the server device 30 may determine such unfairness of a player based on the game result information received in step S204. In other words, the server device 30 may determine whether the game result information is equal to or more than a predetermined threshold. The predetermined threshold may be set based on the "level" of this player included in the player information DB 31a, for example. The "level" included in the player information DB 31a includes the results in previous games. Therefore if the game result information is equal to or more than a predetermined threshold which is set based on this "level", that is, if the gap between the result in the previous games and the result in the game of this even is too big, the server device 30 can estimate that the player has acted unfairly. In the case where the game result information is determined as being equal to or more than this predetermined threshold, the server device 30 may send a notification, such as a predetermined alert, to the player terminal 20 used by the player suspected of unfair activity, the player terminals 20 used by the opponent players, the information processing device used by a predetermined event manager, and the like.

### (S206)

Then the server device 30 specifies a game that is scheduled next and an opponent, with reference to the game information DB 31c, and notifies the player terminal 20 used by the opponent player with information related to this game that is scheduled next (information on the opponent, number of the dart game device 10 used for the game, and the like). Thereby the processing that is executed when a game is progressing and when a game ends is completed.

### (5) Supplementary information

In the above mentioned embodiment, when a game starts, the two-dimensional code including the opponent information and the competition information acquired by the dart game device 10 is displayed first, then the player terminal 20 sends the information acquired by reading this two-dimensional code to the server device 30 (steps S105 to S109). However these processing steps need not always be executed when a game starts. In other words, when a game starts, the opponents may arbitrarily operate the dart game device 10 to progress the game, and display of the two-dimensional code by the dart game device 10, the reading of the two-dimensional code, and the transmission of the read information to the server device 30 by the player terminal 20 (steps S202 to S203) described with reference to Figure 14 may be executed when the game is over. In this case, input of the competition information to the dart game device 10 (step S105) and reading of the player card (step S106) may be executed when the game is over, and the two-dimensional code, which is displayed in step S202, may include this competition information and game information.

In the above mentioned embodiment, the dart game device 10 reads the player card, whereby the player ID is acquired (S106). However the dart game device 10 need not always read the player card. For example, using the player terminal 20 as a medium storing the player ID, the dart game device 10 may read the player ID from the player terminal 20. Further, instead of the dart game device 10 reading a medium storing the player ID, the player terminal 20 may acquire the player ID which the player inputted to the player terminal 20, or may acquire the player ID stored in the storage unit 21 in advance. The player terminal 20 may send the player ID (opponent information) acquired like this to the server device 30, for example. Further, instead of acquiring the player ID, the player terminal 20 may acquire the opponent player identification information inputted by the player (e.g., input of player name) as the opponent information, and send this information to the server device 30. In this case, the server device 30 may cross reference the opponent information (e.g., player name) inputted by the payer against a database and specify the player ID thereby.

In the above mentioned embodiment, the dart game device 10 displays a two-dimensional code and the player terminal 20 then reads this two-dimensional code, whereby various information (e.g., game result information, competition information, opponent information) is provided from the dart game device 10 to the player terminal 20 (S107, S108, S202, S203). However the means for the dart game device 10 to provide various information to the player terminal 20 are not limited to this. The dart game device 10 may send various information to the player terminal 20 via the short range wireless communication, and the player terminal 20 may receive various information via the short range wireless communication, for example. The short range wireless communication is not especially limited, and may be Wi-Fi, Bluetooth, or the like.

In the above mentioned embodiment, the game system 1 was described using the example of a dart game. However the game system 1 is applicable to throwing-based games other than dart games, and also is applicable to general arcade games other than throwing based games. Hence the game system 1 may include a game device to perform a throwing game, or a game device to perform an arcade game or the like, instead of the dart game device 10.

As described above, in the present embodiment, the player terminal 20 acquires the game result information by reading the two-dimensional code or the like displayed on the dart game device 10, and sends this information and the opponent information to the server device 30. Therefore the dart game device 10 can progress the game event even in an offline state where communication with the server device 30 is not performed. This allows to reduce labor cost, time cost, financial cost, or the like required to install the communication function in the dart game device 10, hence game event costs can be decreased. Further, according to the present embodiment, the game event progresses in the same way as the normal case of using the dart game device online, hence the player is not conscious or recognize that the dart game deice is in an offline state, and the game experience of the player is in no way diminished.

### [Modifications]

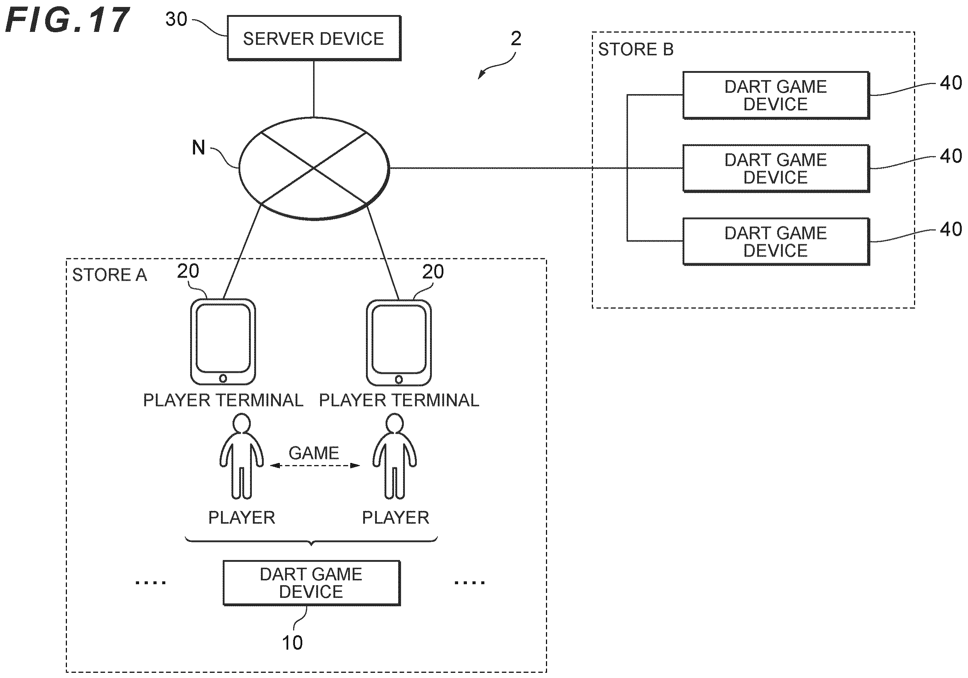

The game system 2 according to a modification will be described with reference to Figure 17. In the following, mainly the parts of the game system 2 of the modification that are different from the game system 1 of Embodiment 1 will be described, and description of the parts similar to those of the game system 1 of Embodiment 1 will be essentially omitted.

Figure 17 is a schematic diagram depicting a configuration of the game system 2 according to the modification. As illustrated in Figure 17, the game system 2 includes, for example, a plurality of dart game devices 10, a player terminal 20 which each player uses, a server device 30, and a plurality of dart game devices 40. The sites where the plurality of dart game devices 10 and the plurality of dart game devices 40 are installed are not especially limited, and may be a large scale event site (e.g., exhibition hall) or a store (e.g., dart bar, game center), for example. In this modification, an example where the plurality of dart game devices 10 are installed in store A, and the plurality of dart game devices 40 are installed in store B, which is different from store A, will be described.

The dart game device 10 installed in store A is an offline device which has no function to communicate with the server device 30 via the communication network N. The dart game device 40 installed in store B is an online device which has the function to communicate with the server device 30 via the communication network N. The player terminal 20 used by each player is configured to be communicable with the server device 30 via a communication network N, such as the Internet. Each player can play a dart game using the offline dart game device 10 in store A or the like, or can play a dart game using the online dart game device 40 in store B, or the like.

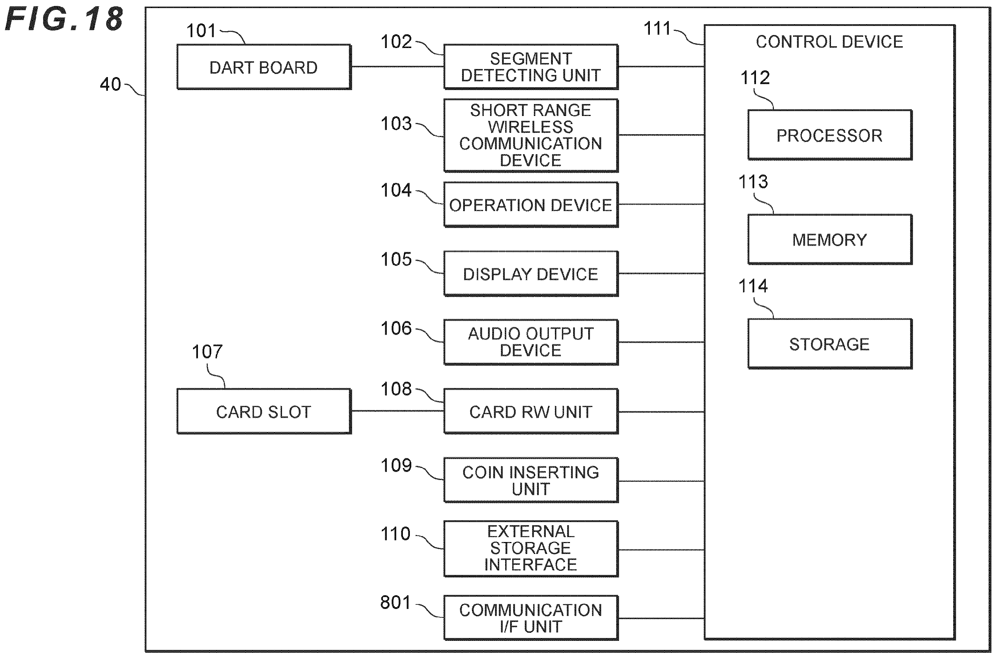

A configuration of the dart game device 40 will be described with reference to Figure 18. In the following, mainly the parts of the dart game device 40 that are different from the dart game device 10 will be described, and description on the parts similar to those of the dart game device 10 will be essentially omitted.

Figure 18 is a block diagram depicting an example of a hardware configuration of the dart game device 40. The actual configuration of the dart game device 40 is not limited to this, and may be the DARTSLIVE (registered trademark), DARTSLIVE 2, DARTSLIVE 3 devices or the like, made by DARTSLIVE Co. Ltd, for example. In addition to at least a part of the configuration of the dart game device 10, the dart game device 40 further includes a communication I/F unit 801. The communication I/F unit 801 is a device to perform cable or wireless data communication with a device outside the dart game device 40 via the communication network N. The communication I/F unit 801 may be installed outside the dart game device 40. In this case, the communication I/F unit 801 is connected to the dart game device 40 using such an interface as USB, for example. The dart game device 40 may include at least a part of the above mentioned functional units included in the dart game device 10 described with reference to Figure 4. Further, the transmitting/receiving unit 12b included in the dart game device 40 may transmit/receive arbitrary information to/from the server device 30 via the communication I/F unit 801 and the communication network N.

In the game system 2 according to the modification, when the player plays a dart game using the dart game device 10, the offline dart game device 10 first acquires dart game related information, such as the player information, competition information and game information, then displays a two-dimensional code to acquire the dart game related information. Then the player terminal 20 reads the two-dimensional code displayed on the offline dart game device 10 to acquire the dart game related information, and sends this information to the server device 30. The server device 30 registers the dart game related information acquired from the player terminal 20 in various databases (player information DB 31a, competition information DB 31b, game information DB 31c, and the like) as the dart game related information.

Further, in the game system 2 according to the modification, when the player plays a dart game using the dart game device 40, the online dart game device 40 first acquires dart game related information, such as the player information, competition information and game information, then sends this information to the server device 30. Then the server device 30 registers the dart game related information acquired from the online dart game device 40 in various databases (player information DB 31a, competition information DB 31b, game information DB 31c, and the like).

The server device 30 integrates dart game related information collected from the offline dart game device 10 and the online dart game device 40 respectively, and registers this integrated information in various databases (player information DB 31a, competition information DB 31b, game information DB 31c, and the like). The dart game related information, which the server device 30 integrated and stored, may be freely read by the dart game device 40 and the player terminal 20 accessing the server device 30, for example.

In the game system 2 according to the modification, the dart game related information can be collected even from the offline dart game device 10 using the two-dimensional code, or the like, and integrated with the dart game related information collected by the online dart game device 40. Thereby it is possible to capture the dart game related information from a wide range of devices, not only from online dart game devices, but also from offline dart game devices, while reducing the facility investment to provide a communication function with the server device 30. This increases interest in the dart game and motivates the players to participate in the community of the game system 2.

In the game system 2 according to the modification, the dart game related information is sent to the server device 30, and is recorded even if the offline dart game device 10 is used, hence players can participate in various campaigns.

In the game system 2 according to the modification, the dart game related information is provided to the server device 30, even from the offline dart game device 10 via the player terminal 20. Therefore even in the case where a player plays a dart game using the offline dart game device 10, the player can be connected with other players, stores, services providers, and the like, performing interactive communication.

The dart game device 10 according to Embodiment 1 and/or this modification may be a dart game device installed in a store which had a communication function with the server device 30 in the past, just like the dart game device 40, but of which online contract with the service provider expired.

The present invention is not limited to the above mentioned embodiments, but various changes can be made within the scope of the claims, and embodiments implemented by appropriately combining the technical means disclosed in the above mentioned embodiments are also included in the technical scope of the present invention.

### Reference Signs List

- 1: Game system
- 10: Dart game device
- 11: Storage unit
- 12: Control unit
- 12a: Output control unit
- 12b: Transmitting/receiving unit
- 12c: Operation accepting unit
- 12d: Game progressing unit
- 12e: Player card reading unit
- 101: Dart board
- 102: Segment detecting unit
- 103: Short range wireless communication device
- 104: Operation device
- 105: Display device
- 106: Audio output device
- 107: Card slot
- 108: Card RW unit
- 109: Coin inserting unit
- 110: External storage interface
- 111: Control device
- 112: Processor
- 113: Memory
- 114: Storage
- 20: Player terminal
- 21: Storage unit
- 22: Control unit
- 22a: Output control unit
- 22b: Transmitting/receiving unit
- 22c: Operation accepting unit
- 22d: Two-dimensional code reading unit
- 30: Server device
- 31: Storage unit
- 32: Control unit
- 32a: Transmitting/receiving unit
- 32b: DB managing unit
- 32c: Determining unit
- 32d: Login processing unit
- 200: Computer
- 201: Processor
- 202: Memory
- 203: Storage
- 204: Operation device
- 205: Data I/F unit
- 206: Communication I/F unit
- 207: Display device
- 208: Audio output device
- 801: Communication I/F unit

## Claims

1. A game system comprising:
a game device to play a dart game;
a player terminal which a player uses; and
a server device which is accessible to a storage unit to store dart game related information on a dart game played by a plurality of players, wherein
the game device includes:
a game progressing unit which progresses each game of a dart game and records a result of each opponent; and
a game result information providing unit which provides game result information, indicating a result of each opponent in the game, to the player terminal,
the player terminal includes:
a game result information acquiring unit which acquires the game result information provided by the game device;
an opponent information acquiring unit which acquires opponent information indicating player identification information of each opponent in the game; and
a game outcome information transmitting unit which sends game outcome information, indicating a game outcome including the game result information and the opponent information, to the server device, and
the server device includes:
a game outcome information receiving unit which receives the game outcome information from the player terminal; and
a management unit which records the received game outcome information in the dart game related information stored in the storage unit.

2. The game system according to Claim 1, wherein
the player terminal further includes:
an opponent information transmitting unit which sends the opponent information acquired by the opponent information acquiring unit to the server device before sending the game result information to the server device, and
the server device further includes:
an opponent information receiving unit which receives the opponent information from the player terminal.

3. The game system according to Claim 1 or 2, wherein
the game result information providing unit included in the game device displays a two-dimensional code including the game result information, and
the game result information acquiring unit included in the player terminal acquires the game result information by reading the displayed two-dimensional code.

4. The game system according to Claim 1 or 2, wherein
the game result information providing unit included in the game device sends the game result information to the game result information acquiring unit included in the player terminal via short range wireless communication, and
the game result information acquiring unit included in the player terminal acquires the game result information sent from the game result information providing unit included in the game device via short range wireless communication.

5. The game system according to Claim 1 or 2, wherein
the game device further includes:
a second opponent information acquiring unit which acquires the opponent information; and
an opponent information providing unit which provides the opponent information to the opponent information acquiring unit included in the player terminal.

6. The game system according to Claim 5, wherein
the opponent information providing unit included in the game device displays a two-dimensional code including the opponent information, and
the opponent information acquiring unit included in the player terminal acquires the opponent information by reading the displayed two-dimensional code.

7. The game system according to Claim 5, wherein
the opponent information providing unit included in the game device sends the opponent information to the opponent information acquiring unit included in the player terminal via short range wireless communication, and
the opponent information acquiring unit included in the player terminal acquires the opponent information which is sent from the opponent information providing unit included in the game device via short range wireless communication.

8. The game system according to Claim 2, wherein
the server device further includes a determining unit which determines consistency with the dart game related information stored in the storage unit, for a combination of players indicated in the opponent information included in the game outcome information received by the game outcome information receiving unit or indicated in the opponent information received by the opponent information receiving unit.

9. The game system according to Claim 1 or 2, wherein
the opponent information acquiring unit included in the player terminal acquires a player ID used for identifying a player, as the opponent information.

10. The game system according to Claim 9, wherein
the game device further includes a player ID acquiring unit which acquires the player ID by reading a predetermined medium storing the player ID, and
the opponent information acquiring unit included in the player terminal acquires the player ID, which is acquired by the player ID acquiring unit included in the game device, from the game device as the opponent information.

11. The game system according to Claim 9, wherein
the opponent information acquiring unit included in the player terminal acquires the player ID, which is stored in the storage unit included in the player terminal as the opponent information.

12. The game system according to Claim 9, wherein
the server device further includes:
a login processing unit which executes login processing of the player terminal; and
a determining unit which determines consistency with the information related to the login processing, for the player ID received from the player terminal as the opponent information.

13. A game device to play a dart game, comprising:
a game progressing unit which progresses each game of a dart game and records a result of each opponent; and
a game result information providing unit which provides game result information, indicating a result of each opponent in the game, to a player terminal which a player uses, wherein
the player terminal includes:
a game result information acquiring unit which acquires the game result information provided by the game device;
an opponent information acquiring unit which acquires opponent information indicating player identification information of each opponent in the game; and
a game outcome information transmitting unit which sends game outcome information, indicating a game outcome including the game result information and the opponent information, to a server device which is accessible to a storage unit to store dart game related information on a dart game played by a plurality of players, wherein
the server device includes:
a game outcome information receiving unit which receives the game outcome information from the player terminal; and
a management unit which records the received game outcome information in the dart game related information stored in the storage unit.

14. A program for causing a game device used to play a dart game to function as:
a game progressing unit which progresses each game of a dart game and records a result of each opponent; and
a game result information providing unit which provides game result information, indicating a result of each opponent in the game, to a player terminal which a player uses, wherein
the player terminal includes:
a game result information acquiring unit which acquires the game result information provided by the game device;
an opponent information acquiring unit which acquires opponent information indicating player identification information of each opponent in the game; and
a game outcome information transmitting unit which sends game outcome information, indicating a game outcome including the game result information and the opponent information, to a server device which is accessible to a storage unit to store dart game related information on a dart game played by a plurality of players, wherein
the server device includes:
a game outcome information receiving unit which receives the game outcome information from the player terminal; and
a management unit which records the received game outcome information in the dart game related information stored in the storage unit.
